# EUROPEAN PATENT APPLICATION

(11) **EP 4 644 843 A1**
(43) Date of publication of application: **05.11.2025**
(21) Application number: 24905153.3
(22) Date of filing: 07.06.2024
(51) Int. Cl.: G01D 18/00, G01D 21/02

(54) **CALIBRATION MEMBER, AND METHOD FOR USING CALIBRATION MEMBER TO CALIBRATE DETECTION SYSTEM**

(30) Priority: 08.03.2024 CN 202410266848
(71) Applicant: Contemporary Amperex Technology Co., Limited, Ningde, Fujian 352100 (CN)
(72) Inventor: ZHENG, Nishan, Ningde,Fujian 352100 (CN); CHEN, Chao, Ningde,Fujian 352100 (CN); XU, Deming, Ningde,Fujian 352100 (CN); CHEN, Yupei, Ningde,Fujian 352100 (CN); HUANG, Shumao, Ningde,Fujian 352100 (CN); HUANG, Wenfang, Ningde,Fujian 352100 (CN); CAO, Zerong, Ningde,Fujian 352100 (CN)
(74) Representative: Gong, Jinping
(86) International application number: PCT/CN2024/098058
(87) International publication number: WO 2025/184999

(57) **Abstract**

The present application provides a calibration element and a method for calibrating a detection system using the calibration element. The calibration element includes a base body including a side face and at least one reference portion located at the side face of the base body, wherein the at least one reference portion has at least two of the following items: at least one first shape feature perpendicular to the side face, at least one second shape feature parallel to the side face, and at least one color feature, wherein the at least one first shape feature, the at least one second shape feature and the at least one color feature are used for calibration of the detection system. The technical solutions in the embodiments of the present application can efficiently determine whether a fault exists in the detection system, find and solve a problem in a timely manner, thereby ensuring the normal operation of the system.

## Description

### CROSS REFERENCE

The present application makes reference to Chinese Patent Application No. 202410266848.2, filed on March 8, 2024 and entitled "Calibration Element and Method for Calibrating Detection System Using Calibration Element", which is incorporated herein by reference in its entirety.

### TECHNICAL FIELD

The present application relates to the technical field of detection, and in particular, to a calibration element for a detection system, a method and apparatus for calibrating the detection system using the calibration element, and an electronic device.

### BACKGROUND

In industry, a detection system is a very critical part that is used to make the quality and performance of the work pieces produced comply with standards to ensure the safety, reliability and performance of the entire manufactured product. The detection system can ensure that every product or component produced meets the same standards and specifications, resulting in product consistency and stability.

Determining whether the detection system works properly is a key link for the stable and reliable operation of the detection system, some potential failures can be prevented by checking the detection system, and when a problem occurs, it can be detected and solved in a timely manner. The accuracy of the measurement data acquired by the detection system can only be guaranteed under the premise that the detection system works properly, so that subsequent quality analysis and improved detection of the detection system can detect and correct problems that may lead to defects or defective products, for example, damaged light sources, dirty lenses, loose cable connections, and the like, may affect the normal operation of the system.

To inspect the detection system to make it work stably and reliably to exert benefits is the technical problem to be urgently solved.

### SUMMARY

The present application aims to solve at least one of the technical problems existing in the background art. To this end, an objective of the present application is to provide a calibration element for a detection system, a method and apparatus for calibrating the detection system using the calibration element, an electronic device, and a detection system, so that the detection system can work stably and reliably.

An embodiment in a first aspect of the present application provides a calibration element for a detection system, including a base body and at least one reference portion, the at least one reference portion being located at a side face of the base body, where the at least one reference portion has at least two of the following items: at least one first shape feature perpendicular to the side face, at least one second shape feature parallel to the side face, and at least one color feature, where the at least one first shape feature, the at least one second shape feature and the at least one color feature are used for calibration of the detection system.

In the technical solution of the embodiment of the present application, at least two of the at least one first shape feature, the at least one second shape feature, and the at least one color feature are disposed on the calibration element, which has the following beneficial effects: when the calibration of the detection system is performed using the calibration element provided in the embodiment of the present application, various kinds of information or elements that may affect the normal operation and accuracy of the detection system may be comprehensively considered, thereby achieving multi-dimensional calibration and improving the precision and accuracy of the calibration. The calibration element provided in the above embodiment may efficiently and comprehensively determine whether a fault exists in the detection system, so as to timely find and solve the problem, promote the normal operation of the detection system, and improve the measurement accuracy and reliability of the detection system, thus making the detection result accurate. Compared with the calibration element in which only one data and measurement mode can be detected in the conventional method, the calibration element in the above embodiment not only improves the efficiency of the calibration detection system, thereby improving the production efficiency, but also avoids the troublesome operation and the possibility of human errors that need to replace different calibration elements at the detection site.

In some embodiments, any one fiducial portion includes a corresponding first shape feature, a corresponding second shape feature, and a corresponding color feature. Since each of the reference portions has the three features of the first shape feature, the second shape feature, and the color feature, the different components of the detection system can be calibrated using only one calibration element in the above embodiment, so as to meet the calibration requirement of the specific inspection system, and the flexibility and fitness of calibrating the detection system are improved, and the cumbersome operation and the possibility of human errors that need the replacement of different calibration elements at the detection site are avoided, thereby improving the production efficiency.

**In** some embodiments, the calibration element includes a plurality of reference portions, each reference portion including a corresponding first shape feature, a size of the first shape feature corresponding to each of the plurality of reference portions varying according to a predetermined variation rule. The above embodiments may enable the first shape feature corresponding to the plurality of reference portions to form a size gradient (i.e., a depth gradient) to achieve that the size range of the first shape feature (i.e., depth) of the calibration element may cover as much as possible the size range of the object (e.g., defect) measured when the detection system works, thereby enabling the calibration element to calibrate the size range measured when the detection system works, resulting in more comprehensive calibration. This is because the calibration detection system may have different detection accuracy in different ranges, and the calibration detection size range can be enlarged by the first shape feature that varies according to the predetermined variation rule in the calibration element, thereby efficiently calibrating the detection performance of the detection system at different accuracy.

**In** some embodiments, there is a predetermined difference value between a color parameter of the at least one color feature and a color parameter of a surface on which the at least one reference portion is located. The introduction of the predetermined difference value helps the calibration of the detection system by the color feature on the calibration element to be no longer dependent on a single measurement value, which reduces the possibility of misjudgment, thereby improving the reliability and accuracy of the calibration process and the results.

**In** some embodiments, the predetermined difference value is obtained by performing an oxidation treatment on the at least one reference portion and the surface and performing an electric spark treatment on the surface after the oxidation treatment. The oxidation treatment and the electric spark treatment can form the color feature without affecting the first shape feature and the second shape feature, which contributes to improving the accuracy of the calibration and improving the precision of the calibration result.

In some embodiments, a groove is formed in a side surface of the base body, and the calibration element further includes a calibration block for being inserted into the groove, the calibration block defining at least one reference portion. Since the reference portion has high requirements for processing quality, the above embodiment enables the calibration block having the reference portion to be individually processed, thereby facilitating the accurate first shape feature, second shape feature, and color feature on the reference portion, while the processing quality of the base body without the base portion can be reduced to reduce the manufacturing cost.

In some embodiments, the calibration block is detachably connected to the base. That is, in this embodiment, the calibration block and the base body of the calibration element can be easily detached by the detachable connection design, so that the calibration block can be replaced according to different calibration requirements or other practical conditions of the detection system. This facilitates quick and convenient operation when calibration parameters need to be adjusted or calibration blocks need to be replaced, and also advantageously improves the efficiency of the calibration detection system.

In some embodiments, the base body is provided with a hollow portion for reducing the weight of the base body. This reduces the overall weight of the calibration element, which advantageously reduces the material costs in the manufacturing process of the calibration element.

In some embodiments, the detection system includes a first image acquisition unit and a second image acquisition unit, and at least one first shape feature is used for calibration of the first image acquisition unit, at least one second shape feature and at least one color feature are used for calibration of the second image acquisition unit. The above embodiments achieve multi-dimensional calibration of the detection system by using different features on the calibration element to calibrate different image acquisition units in the detection system. The above embodiments can efficiently and comprehensively determine whether a fault exists in the detection system, and since different image acquisition units in the detection system are calibrated using different features, the calibration results do not affect each other, and therefore, the system has higher precision.

In some embodiments, the shape and size of the base body match the shape and size of the cell. Thus, the calibration element provided in the above embodiments can enable calibration of the detection system for the cell.

An embodiment in a second aspect of the present application provides a method for calibrating a detection system using the calibration element in any one of the above embodiments of the present application. The detection system includes a first image acquisition unit and a second image acquisition unit, and the method includes: enabling at least one of the first image acquisition unit and the second image acquisition unit to scan at least one reference portion of the calibration element to obtain measurement data of the at least one reference portion, where the measurement data includes measurement data of at least two of the at least one first shape feature, the at least one second shape feature and the at least one color feature; acquiring actual data of the at least one reference portion, the actual data including actual data of at least two of the at least one first shape feature, the at least one second shape feature, and the at least one color feature; and determining whether a fault exists in the detection system based on the measurement data and the actual data.

**In** the technical solution of the above embodiment of the present application, the calibration element according to any one of the above embodiments of the present application is scanned to acquire the measurement data of at least one reference portion, and based on the comparison between the measurement data and the actual data, it may be determined whether a fault exists in the first image capturing unit and/or the second image capturing unit of the detection system, so as to timely find and solve the problem, promote the normal operation of the detection system, improve the accuracy and reliability of the measurement, thereby making the detection result accurate. Compared with the conventional method of detecting only one type of image acquisition unit, the above embodiments not only improve the efficiency of the calibration detection system, thereby improving the production efficiency, but also avoids the troublesome operation and the possibility of human errors that need to replace different calibration elements at the detection site.

**In** some embodiments, the at least one reference portion has at least one first shape feature, at least one second shape feature, and at least one color feature, and enabling at least one of the first image acquisition unit and second image acquisition unit to scan the at least one reference portion of the calibration element to obtain measurement data of the at least one reference portion includes: enabling the first image acquisition unit to scan the at least one reference portion of the calibration element to obtain measurement data of a size of the at least one first shape feature; and at least enabling the second image acquisition unit to scan the at least one reference portion of the calibration element to obtain measurement data of a size of the at least one second shape feature and measurement data of a color of the at least one color feature. **In** the above embodiments, the accuracy of the size data and the color feature data acquired by the first image acquisition unit and the second image acquisition unit in the detection system can be determined by acquiring the measurement data of the sizes of the first shape feature and the second shape feature on the reference portion of the calibration element and the measurement data of the color of the color feature, thereby determining whether the first image unit and the second image unit have a fault.

In some embodiments, the detection system further includes a light source and at least enabling the second image acquisition unit to scan the at least one reference portion of the calibration element includes: enabling the light source to illuminate the calibration element; and enabling the second image acquisition unit to scan the at least one reference portion of the calibration element. In the above embodiment, the calibration element under the illumination of the light source is scanned by the second image acquisition unit, so that whether a fault exists in the light source and the second image acquisition unit in the detection system may be determined.

In some embodiments, the measurement data of the at least one color feature includes measurement data of a color difference value between the at least one color feature and a surface on which the at least one reference portion is located, and the actual data of the at least one color feature includes actual data of the color difference value between the at least one color feature and the surface on which the at least one reference portion is located. In the above embodiment, by comparing the measurement data of the color difference value between the at least one color feature and a surface on which the at least one reference portion is located with the actual data, whether a fault exists in the image acquisition unit of the color difference value acquired by the detection system may be determined.

An embodiment in a third aspect of the present application provides an apparatus for calibrating a detection system using the calibration element according to any one of the above embodiments, the detection system including a first image acquisition unit and a second image acquisition unit, the apparatus including a scanning module, configured to enable at least one of the first image acquisition unit and the second image acquisition unit to scan at least one reference portion of the calibration element to obtain measurement data of the at least one reference portion, where the measurement data includes measurement data of at least two of the at least one first shape feature, the at least one second shape feature, and the at least one color feature, a first acquisition module, configured to acquire actual data of the at least one reference portion, where the actual data includes actual data of at least two of the at least one first shape feature, the at least one second shape feature, and the at least one color feature, and a first determining module, configured to determine whether a fault exists in the detection system based on the measurement data and the actual data. This embodiment solution may obtain the technical effects same as the effects of the corresponding method described above.

An embodiment in a fourth aspect of the present disclosure provides an electronic device, including at least one processor and a memory communicatively connected to the at least one processor, where the memory stores instructions executable by the at least one processor, and the instructions are executed by the at least one processor, so that the at least one processor can perform the method of calibrating a detection system using a calibration element according to any one of the above embodiments in the second aspect of the present application.

An embodiment in a fifth aspect of the present application provides a detection system including a calibration element according to the present disclosure, a carrier, configured to place the calibration element, at least one light source, configured to illuminate the calibration element located on the carrier, a first image acquisition unit, configured to scan the calibration element located on the carrier for acquiring information of a first shape feature of at least one reference portion of the calibration element, and a second image acquisition unit, configured to scan the calibration element located on the carrier for acquiring information of a second shape feature and a color feature of the at least one reference portion.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application. In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a three-dimensional diagram of a calibration element for a detection system according to some embodiments of the present application;
FIG. 2 is a main view showing a calibration element in FIG. 1;
FIG. 3 is a top view showing the calibration element in FIG. 1;
FIG. 4 is a partially enlarged view showing at least one reference portion of the calibration element in FIG. 3;
FIG. 5 is a three-dimensional diagram showing a calibration block of the calibration element in FIG. 1;
FIG. 6 is an enlarged view of a region A of the calibration element in FIG. 5;
FIG. 7 is a schematic diagram of a detection system according to some embodiments of the present application;
FIG. 8 is a schematic diagram of a flow of a method for calibrating a detection system according to some other embodiments of the present application;
FIG. 9 is a structural block diagram of an apparatus for calibrating a detection system according to some other embodiments of the present application; and
FIG. 10 is a schematic diagram of a flow of a method for calibrating a detection system according to some other embodiments of the present application.

Description of reference signs:
calibration element 100, side face 101, reference portion 102, hollow portion 103, base body 104, first shape feature 106, second shape feature 105, first surface 107, surface 108 on which the reference portion is located, calibration block 200, detection system 300, carrier 2, second image acquisition unit 3, first image acquisition unit 4, first light source 5, second light source 6.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

**In** the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. **In** the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. **It** is explicitly and implicitly understood by a person skilled in the art that the embodiments described herein may be combined with other embodiments.

**In** the description of the embodiments of the present application, the term "and/or" merely describes an association relationship of associated objects, indicating that three relationships may exist, for example, A and/or B may mean that A exists alone, A and B exist simultaneously, or B exists alone. **In** addition, the character "/" herein generally indicates that associated objects are in a "or" relationship.

**In** the description of the embodiments of the present application, the term "a plurality of" means two or more (including two), and similarly, the term "a plurality of groups" means two or more groups (including two groups), and the term "a plurality of pieces" means two or more pieces (including two pieces).

**In** the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of power batteries is becoming increasingly more widespread. As an application field of power batteries continues to expand, a market demand for power batteries continues to increase.

With the development of modern industry, detection systems are becoming increasingly important on the market. They play a crucial role in various industries, monitoring and ensuring product quality, safety, and performance, and also playing a key role in production efficiency and cost control, for example, in manufacturing industry, the detection systems can monitor the size, shape, appearance, and other features of a product in real time on a production line through automatic and precise measurement and analysis, so that the product reaches a desired quality level, which not only improves product consistency and stability, but also improves business competitiveness on the market. The detection systems are used not only in energy storage power systems such as hydropower, thermal power, wind power, and solar power plants, but also in electric tools such as electric bicycles, electric motorcycles, and electric vehicles, as well as military equipment, aerospace, and many other fields.

In actual production activities, the detection systems may cause various faults in each process stage of battery production, further leading to generation of defects or defective products. For example, damaged light sources, dirty lenses, loose cable connections, and the like may all affect the normal operation of the detection systems. In this case, determining whether the detection systems work normally is a key link for making the detection systems operate stably and reliably, some potential faults may be prevented by checking the detection systems, and when a problem occurs, it can be found and solved in a timely manner. The accuracy of the measurement data acquired by the detection system can be guaranteed only if the detection system works normally for subsequent quality analysis and improvement. In the case of inspecting the detection system using a defective cell, a large number of defective cells need to be collected since there are many kinds of defective cells. On the one hand, it is difficult to collect all the defective cells, and on the other hand, the collected defective cells are not defined by a uniform standard and have poor consistency, which will affect the comprehensive and accurate detection of the detection system. In the related art, the calibration method for a visual system generally uses a visual calibration block, and the calibration is performed by comparing a standard value of the calibration block with a measurement value of the visual system. However, one calibration block typically detects only one type of data, which is too tedious for field operation of the detection system, and cannot cover all detection items. For example, a 3D camera (also referred to as a depth camera, D is a dimension, which may be understood as a dimension, and 3D is three dimensional) and a 2D camera (also referred to as a planar camera, D is a dimension, which may be understood as a dimension, and 2D is two dimensional) and light source brightness (gray scale information) cannot be calibrated at the same time. For the verification of a light source, the light source is usually verified by some simple apparatuses or even by the experience of a verifier, and the attenuation condition of the light source cannot be quantitatively calibrated and detected, and the light source actually affects the imaging effect and thus the detection accuracy.

In view of this, provided a calibration element for a detection system. At least two of a planar feature, a depth feature, and a color feature may be disposed in one calibration element to accurately, comprehensively, and efficiently determine whether a fault exists in the detection system by one calibration element, so that the detection system can work stably and reliably.

The solution in the embodiment of the present application is applied to a detection system in each production process, for example, a detection system for detecting the welding quality of a cell. The inspection method and calibration element of the present application are described below with reference to the accompanying drawings.

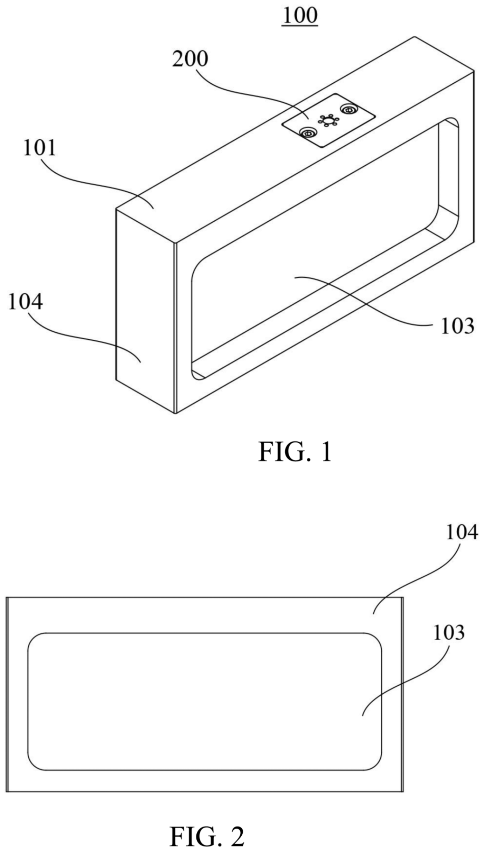

The calibration element 100 will now be described in detail with reference to FIGS. 1 to 7.

As shown in FIG. 1, a calibration element 100 for a detection system 300 according to some embodiments of the present application includes a base body, and at least one reference portion located on a side surface of the base body, where the at least one reference portion has at least two of at least one first shape feature perpendicular to the side surface, at least one second shape feature parallel to the side surface, and at least one color feature, where the at least one first shape feature, the at least one second shape feature, and the at least one color feature are used for calibration of the detection system.

The calibration herein mainly refers to the use of standard metrical instruments to detect whether the accuracy of the instruments used meets the standard, and is generally used for instruments or systems with higher precision. A calibration element is a tool or standard object used in a calibration process to calibrate or verify a measurement device, usually having known properties or sizes, which may be used as a standard to compare the output values of the measurement device. By comparison with the calibration element, errors of the measurement device may be identified and corrected.

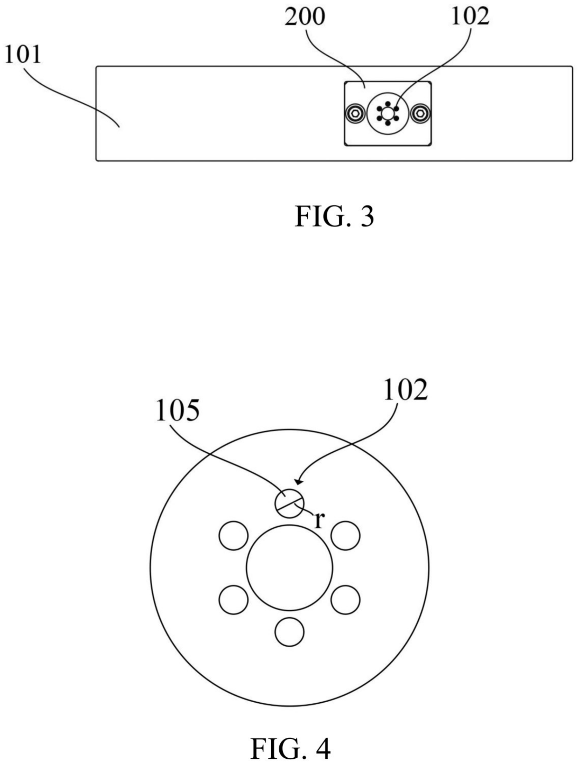

As shown in FIGS. 2 and 3, the reference portion 102 of the calibration element 100 is located on the side surface 101 of the base body 104. The reference portion may be located directly on the side of the base body, or may be located on another component (e.g., the calibration block 200) on the side of the reference portion. The shape of the cross section of the reference portion 102 in the calibration element 100 is not limited, and may be rectangular, square, circular, or the like. The reference portion 102 may be obtained by, for example, laser lithography or a numerically controlled milling machine.

As shown in FIG. 4, the number of at least one reference portion 102 may be one or more, for example, 6. The plurality of reference portions 102 may be arranged in a ring shape for manufacturing convenience, or may be arranged in a matrix as shown in FIG. 4. The at least one reference portion includes least two of the at least one first shape feature, the at least one second shape feature, and the at least one color feature, which may include the following conditions: each of the reference portions in the at least one reference portion has a first shape feature, a second shape feature, and a color feature; a first reference portion in the at least one reference portion has a first shape feature, a second reference portion of the at least one reference portion has a second shape feature, a third reference portion in the at least one reference portion has a color feature; a part of the at least one reference portion has the first shape feature and the second shape feature, another part of the at least one reference portion has the color feature, and the like.

As shown in FIG. 4, the second shape feature 105 of the reference portion 102 is a planar feature parallel to the side surface 101, and the size of the second shape feature 105 may be a length, a width, a diameter (a diameter r shown in FIG. 4, when the cross section of the reference portion is circular), or an area of the surface of the reference portion 102 parallel to the side surface 101.

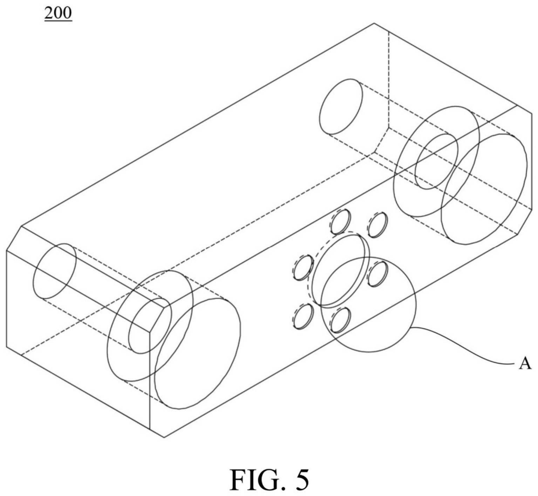

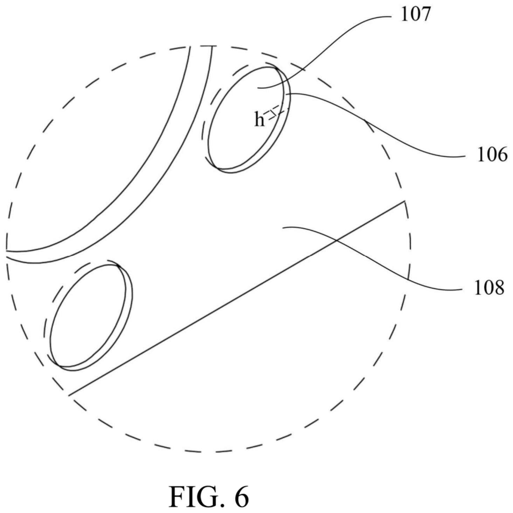

As shown in FIGS. 5 to 6, the first shape feature 106 of the reference portion 102 is a depth feature (in the case that the reference portion is a groove) or a height feature (in the case that the reference portion is a projection) perpendicular to the side surface 101 (i.e., the plane in which the reference portion 102 is located). The size of the first shape feature 106 may be a depth (a depth h as shown in FIG. 6) or a height of the reference portion perpendicular to the side surface 101.

In some embodiments, the color feature may be a color on a surface of the reference portion (e.g., the first surface 107 of the reference portion when the reference portion is a groove), and a color parameter of the color feature may be, for example, a gray value, a reflective index, or the like.

In order to detect the convenience of work of the system, the shape of the calibration element 100 may be hexahedral. The shape of the calibration element 100 may vary depending on the shape of the workpiece to be detected in the actual work of the detection system, or may be other polyhedrons that may be provided with various reference features to facilitate detection. For example, in the case that the detection system is used for detecting a cell, the shape and size of the reference sample may match, e.g., be completely identical to, the shape and size of the cell.

Disposing at least two of the at least one first shape feature, the at least one second shape feature, and the at least one color feature on the calibration element in the above embodiment has the following beneficial effects: when the calibration of the detection system is performed using the calibration element provided in the embodiment of the present application, various kinds of information or elements that may affect the normal operation and accuracy of the detection system may be comprehensively considered, thereby implementing multi-dimensional calibration and improving the precision and accuracy of the calibration. The calibration element provided in the above embodiment may efficiently and comprehensively determine whether a fault exists in the detection system, so as to timely find and solve the problem, promote the normal operation of the detection system, and improve the measurement accuracy and reliability of the detection system, thus making the detection result accurate. Compared with the calibration element in which only one data and measurement mode can be detected in the conventional method, the calibration element in the above embodiment not only improves the efficiency of the calibration detection system, thereby improving the production efficiency, but also avoids the troublesome operation and the possibility of human errors that need to replace different calibration elements at the detection site.

According to some embodiments of the present application, any one reference portion includes a corresponding first shape feature, a corresponding second shape feature, and a corresponding color feature.

Any one reference portion described above refers to any one of at least one reference portion (including one in the case of one reference portion, each in the case of a plurality of reference portions, some one in the case of a plurality of reference portions, and at least two in the case of a plurality of base portions). Any one reference portion includes the corresponding first shape feature, corresponding second shape feature, and corresponding color feature, which may include the following conditions: one of the at least one reference portion, each of the at least one reference portion, one of the plurality of reference portions in the case of the plurality of reference portions, each of the plurality of reference portions in the case of the plurality of reference portions, at least two of the plurality of reference portions in the case of the plurality of reference portions including the corresponding first shape feature, corresponding second shape feature, and corresponding color feature. As shown in FIGS. 3 to 6, each of the six reference portions is provided with a first shape feature, a second shape feature, and a color feature.

Since each of the reference portions has the three features of the first shape feature, the second shape feature, and the color feature, the different components of the detection system can be calibrated using only one calibration element in the above embodiment, so as to meet the calibration requirement of the specific inspection system, and the flexibility and fitness of calibrating the detection system are improved, and the cumbersome operation and the possibility of human errors that need the replacement of different calibration elements at the detection site are avoided, thereby improving the production efficiency.

**In** some embodiments, for example, only color features, and/or first/second shape features may be disposed on a certain reference portion on the calibration element 100, which is not limited herein.

According to some embodiments of the present application, the calibration element 100 includes a plurality of reference portions, each of the reference portions including a corresponding first shape feature, the size of the first shape feature 106 corresponding to each of the plurality of reference portions varying according to a predetermined variation rule.

The type of the predetermined variation rule is not limited, for example, the size of the first shape feature corresponding to each of the plurality of reference portions may increase or decrease in an equal proportion, change in proportion with a certain slope and intercept (where the slope is not 0), or the like. For example, the sizes of the first shape features of the plurality of reference portions vary by a fixed difference value, and for example, the sizes (e.g., depths) of the first shape features of the six reference portions are 0.02 millimeters (mm), 0.04 mm, 0.06 mm, 0.08 mm, 0.1 0 mm, and 0.12 mm, respectively. The variation rule of the size of the first shape feature may be set adaptively according to different detection systems.

The above embodiments may enable the first shape feature corresponding to the plurality of reference portions to form a size gradient (i.e., a depth gradient) to achieve that the size range of the first shape feature (i.e., depth) of the calibration element may cover as much as possible the size range of the object (e.g., defect) measured when the detection system works, thereby enabling the calibration element to calibrate the size range measured when the detection system works, resulting in more comprehensive calibration. This is because the calibration detection system may have different detection accuracy in different ranges, and the calibration detection size range can be enlarged by the first shape feature that varies according to the predetermined variation rule in the calibration element, thereby efficiently calibrating the detection performance of the detection system at different accuracy.

According to some embodiments of the present application, there is a predetermined difference value between a color parameter of the at least one color feature and a color parameter of a surface on which the at least one reference portion is located.

In the case that the reference portion is a groove, the color feature of the reference portion may be the color of a bottom surface of the reference portion (the first surface 107 as shown in FIG. 6). In the case that the reference portion is a projection, the color feature of the reference portion may be a color on a top surface of the reference portion. As shown in FIG. 6, the surface 108 on which the reference portion is located is, for example, the surface of the calibration block.

The color parameter of the color feature and the color parameter of the surface on which the reference portion is located may be, for example, a parameter describing a color of the surface, for example, a gray value, and the predetermined difference value is a difference value between the gray value of the color feature and the gray value of the surface on which the reference portion is located, that is, a gray difference therebetween. Alternatively, the color parameters may also be Red Green Blue (RGB) color values.

The introduction of the predetermined difference value helps the calibration of the detection system by the color feature on the calibration element to be no longer dependent on a single measurement value, which reduces the possibility of misjudgment, thereby improving the reliability and accuracy of the calibration process and the results.

According to some embodiments of the present application, the predetermined difference value is obtained by performing an oxidation treatment on at least one reference portion and the surface and performing an electrical spark treatment on the surface after the oxidation treatment.

In the above treatment, the calibration element 100 may be first anodized in an electrolytic cell to obtain a color feature of a surface (for example, the first surface 107 as shown in FIG. 6) of the reference portion, and then the calibration element 100 may be subjected to electrical spark treatment to a natural color of a material of which the calibration element is formed, for example, a natural color of an aluminum member. In this treatment mode, the predetermined difference value originates from the difference as the color of the reference portion is different from the surface of other parts of the calibration element.

The oxidation treatment and the electrical spark treatment may form the color feature without affecting the first shape feature and the second shape feature to reduce the influence of the non-uniformity of the surface of the calibration element on the color feature, thereby improving the accuracy of the calibration and improving the precision of the calibration result.

Alternatively, the surface of the reference portion may be subjected to other treatments, such as oxidation treatment only, for another example, oxidation treatment first and polishing treatment of the surface after the oxidation treatment to endow the color feature.

According to some embodiments of the present application, a groove is formed in a side surface of the base body, and the calibration element further includes a calibration block for being inserted into the groove, the calibration block defining at least one reference portion.

As shown in FIGS. 1 and 3, the groove fits the calibration block in shape and volume. The size of the groove may be slightly larger than the calibration block corresponding thereto, so that the calibration block can be fully inserted into the groove. Alternatively, the size of the groove may be slightly smaller than the size of the calibration block to facilitate an interference fit therebetween.

Since the reference portion has high requirements for processing quality, the above embodiment enables the calibration block having the reference portion to be individually processed, thereby facilitating the accurate first shape feature, second shape feature, and color feature on the reference portion, while the processing quality of the base body without the base portion can be reduced to reduce the manufacturing cost.

According to some embodiments of the application, the calibration block is detachably connected to the base body.

The detachable connection between the calibration block 200 and the base body 104 may be realized by means of bolts, or by means of pins, snaps or other means.

That is, in this embodiment, the calibration block and the base body of the calibration element can be easily detached by the detachable connection design, so that the calibration block can be replaced according to different calibration requirements or other practical conditions of the detection system. This facilitates quick and convenient operation when calibration parameters need to be adjusted or calibration blocks need to be replaced, and also advantageously improves the efficiency of the calibration detection system.

According to some embodiments of the present application, the base body is provided with a hollow portion for reducing the weight of the base body.

As shown in FIGS. 1 and 2, the hollow portion 103 in the base body 104 may be in the form of a groove, or may be in the form of a through groove, a through hole, or the like, which is commonly used in other weight reduction designs. It should be understood that the hollow portion disposed in this embodiment may be disposed in another side surface of the calibration element different from the side surface, and may also be disposed in the side surface same as the reference portion without affecting the normal scanning of the reference portion by the detection system.

By disposing the hollow portion in the base body, the overall weight of the calibration element may be reduced, which advantageously reduces the material cost during the manufacture of the calibration element.

According to some embodiments of the present application, the detection system includes a first image acquisition unit and a second image acquisition unit, and at least one first shape feature is used for calibration of the first image acquisition unit, at least one second shape feature and at least one color feature are used for calibration of the second image acquisition unit.

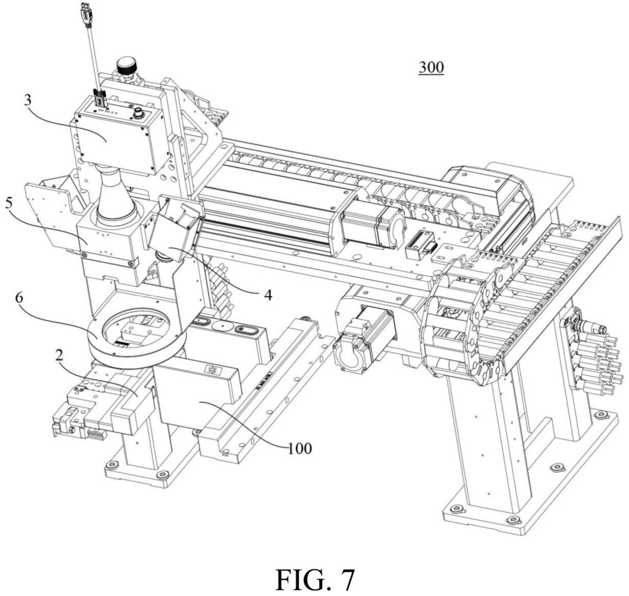

As shown in FIG. 7, the first image acquisition unit 4 may be an image acquisition unit in the detection system capable of acquiring the first shape feature, for example a 3D camera in the detection system. The second image acquisition unit 3 may be an image acquisition unit of the detection system capable of acquiring the second shape and color features, for example a 2D camera.

In the above embodiment, by calibrating different image acquisition units in the detection system using different features on the calibration element, multi-dimensional calibration of the detection system is achieved, whether a fault exists in the detection system can be efficiently and comprehensively determined, and since the different image acquisition units in the detection system are calibrated using different features, the calibration results do not affect each other, thereby having higher accuracy.

According to some embodiments of the present application, the shape and size of the base body match the shape and size of the cell.

The above embodiment enables the calibration element to be adapted to the actual use scenario of the cell detection system, so that whether a fault exists in the detection system for detecting the cell may be inspected more accurately.

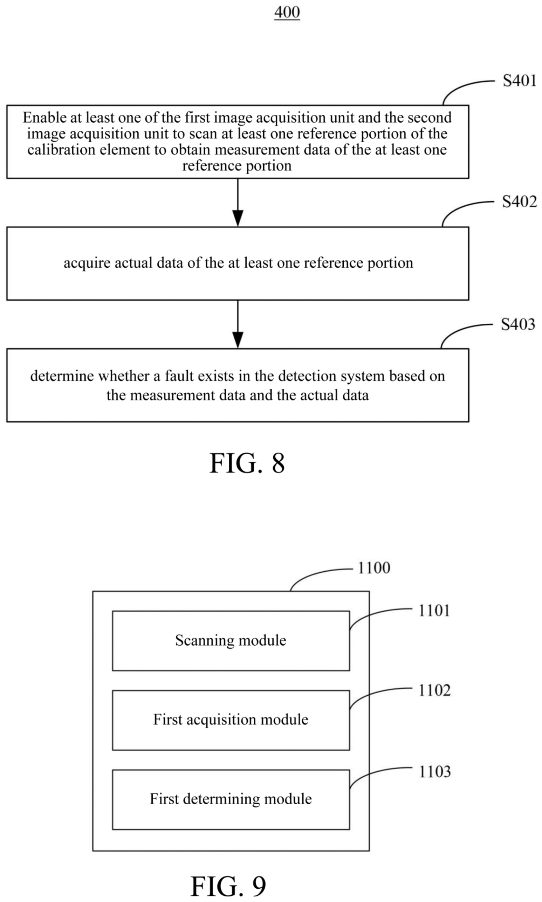

As shown in FIG. 8, an embodiment of the present application further provides a method 400 for calibrating a detection system using a calibration element according to any one of the above embodiments, where the detection system includes a first image acquisition unit and a second image acquisition unit, and the method 400 includes: step S401, enabling at least one of the first image acquisition unit and the second image acquisition unit to scan at least one reference portion of the calibration element to obtain measurement data of the at least one reference portion, where the measurement data includes measurement data of at least two of at least one first shape feature, at least one second shape feature, and at least one color feature; step S402, acquiring actual data of the at least one reference portion, where the actual data includes actual data of at least two of at least one first shape feature, at least one second shape feature, and at least one color feature; and step S403, determining whether a fault exists in the detection system based on the measurement data and the actual data.

The specific type of the image acquisition unit is not limited. For example, the image acquisition unit may be a CCD industrial camera, a CMOS industrial camera, or the like. For another example, the image acquisition unit may be a line camera, an area camera, or the like.

The scanning mode of the image acquisition unit may be varied, the specific type is not limited, and the size data that can be acquired from the reference sample may be used to determine whether a fault exists in the detection system. Specific scanning modes may be, for example, line-by-line or column-by-column scanning, depth scanning and area scanning, or direct image photographing.

Based on the measurement data and the actual data, determining whether a fault exists in the detection system may be comparing whether the measurement data and the actual data are equal, or whether the measurement data falls within a tolerance or a standard deviation of the actual data, and the like.

The above method 400 may be performed at a server, or a client device. The server may include one or more general-purpose computers, a special-purpose server computer (e.g., a PC (personal computer) server, a UNIX servers, a mid-end server), a blade server, a mainframe computer, a server cluster, or any other suitable arrangement and/orcombination. **In** some embodiments, the server may be a server of a distributed system, or a server incorporating a blockchain, a cloud server, an intelligent cloud computing server with artificial intelligence technology, or an intelligent cloud host, and the like. The client device may include various types of computer devices, e.g., portable handheld devices, general purpose computers (such as personal computers and laptop computers), workstation computers, and the like. Alternatively, the method 400 may also be performed at the detection system equipped with an image acquisition unit and a data analysis unit, as shown in FIG. 7.

**In** the technical solution of the above embodiment of the present application, the calibration element according to any one of the above embodiments of the present application is scanned to acquire the measurement data of at least one reference portion, and based on the comparison between the measurement data and the actual data, it may be determined whether a fault exists in the first image capturing unit and/or the second image capturing unit of the detection system, so as to timely find and solve the problem, promote the normal operation of the detection system, improve the accuracy and reliability of the measurement, thereby making the detection result accurate. Compared with the conventional method of detecting only one type of image acquisition unit, the above embodiments not only improve the efficiency of the calibration detection system, thereby improving the production efficiency, but also avoids the troublesome operation and the possibility of human errors that need to replace different calibration elements at the detection site.

According to some embodiments of the present application, the at least one reference portion has at least one first shape feature, at least one second shape feature, and at least one color feature, and enabling at least one of the first and second image acquisition units to scan the at least one reference portion of the calibration element to obtain measurement data of a size of the at least one first shape feature includes: enabling the first image acquisition unit to scan the at least one reference portion of the calibration element to obtain measurement data of a size of the at least one second shape feature and measurement data of a color of the at least one color feature.

As shown in FIG. 4, the measurement data of the size of the second shape feature may be a diameter or an area of a cross section of the reference portion, or in the case that the cross section of the reference portion is a square, the measurement data of the size thereof may be a side length or an area of the square.

As shown in FIG. 6, the size of the first shape feature 106 may be the depth h of the reference portion 102. Alternatively, in a case that the reference portion is a projection, the size of the first shape feature may be the height of the projection.

**In the** above embodiments, the accuracy of the size data and the color feature data acquired by the first image acquisition unit and the second image acquisition unit in the detection system can be determined by acquiring the measurement data of the sizes of the first shape feature and the second shape feature on the reference portion of the calibration element and the measurement data of the color of the color feature, thereby determining whether the first image unit and the second image unit have a fault.

According to some embodiments of the application, the detection system further includes a light source, and enabling at least the second image acquisition unit to scan the at least one reference portion of the calibration element includes: enabling the light source to illuminate the calibration element; and enabling the second image acquisition unit to scan the at least one reference portion of the calibration element.

The number of the light sources may be one or more, as shown in FIG. 7. The detection system includes a first light source 5 and a second light source 6, and the calibration element 100 is illuminated with the first light source 5 and the second light source 6, so that at least the color feature under illumination by the light sources is obtained by the image acquisition unit. **In** some embodiments, the type of the light source is not limited.

In the above embodiment, the calibration element under the illumination of the light source is scanned by the second image acquisition unit, so that whether a fault exists in the light source and the second image acquisition unit in the detection system may be determined.

According to some embodiments of the present application, the measurement data of the at least one color feature includes measurement data of a color difference value between the at least one color feature and a surface on which the at least one reference portion is located, and the actual data of the at least one color feature includes actual data of the color difference value between the at least one color feature and the surface on which the at least one reference portion is located.

In some embodiments, the color difference value between the at least one color feature and the surface on which the at least one reference portion is located may be a difference value between a gray value of the color feature and a gray value of the surface on which the at least one reference portion is located.

In the above embodiment, by comparing the measurement data of the color difference value between the at least one color feature and a surface on which the at least one reference portion is located with the actual data, whether a fault exists in the image acquisition unit of the color difference value acquired by the detection system may be determined.

Alternatively, the measurement data of the at least one color feature may include measurement data of a color of the at least one color feature, while the actual data of the at least one color feature includes actual data of a color of the at least one color feature.

An embodiment in a third aspect of the present application provides an apparatus 1100 for calibrating a detection system using a calibration element according to any one of the preceding embodiments, the detection system including a first image acquisition unit and a second image acquisition unit, the apparatus 1100 including a scanning module 1101, configured to enable at least one of the first image acquisition unit and the second image acquisition unit to scan at least one reference portion of the calibration element to obtain measurement data of the at least one reference portion, where the measurement data includes measurement data of at least two of the at least one first shape feature, the at least one second shape feature, and the at least one color feature, a first acquisition module 1102, configured to acquire actual data of the at least one reference portion, where the actual data comprises actual data of at least two of the at least one first shape feature, the at least one second shape feature, and the at least one color feature, and a first determination module 1103, configured to determine whether a fault exists in the detection system based on the measurement data and the actual data. This embodiment solution may obtain the technical effects same as the effects of the corresponding method described above.

An embodiment of the present application further provides an electronic device, including at least one processor and a memory communicatively connected to the at least one processor, where the memory stores an instruction executable by the at least one processor, and the instruction is executed by the at least one processor, so that the at least one processor can perform the method 400.

An embodiment of the present application further provides a detection system, including a calibration element, a carrier, configured to place the calibration element, at least one light source, configured to illuminate the calibration element on the carrier, a first image acquisition unit, configured to scan the calibration element on the carrier for acquiring information of a first shape feature (e.g., measurement data of the first shape characteristic) of at least one reference portion of the calibration element, and a second image acquisition unit, configured to scan the calibration element on the carrier for acquiring information of a second shape feature and a color feature (e.g., measurement data of the second shape feature and the color feature) of the at least one reference portion.

As shown in FIG. 7, the detection system 300 may include the calibration element 100 shown in FIGS. 1 to 6. The calibration element 100 is placed on or in the carrier 2. In some examples, the calibration element 100 may be manually placed on or in the carrier. Alternatively, the calibration element 100 may also be transported by the production line to the carrier 2 of the detection system 300. The carrier 2 may be a platform, or a clamping member as shown in FIG. 7, which may be configured to place the calibration element and/or cell. In case that the carrier is the clamping member, a plurality of recesses may be formed in the carrier to dispose the calibration element and/or cell therein.

The features of the first image acquisition unit 4 and the second image acquisition unit 3 of the detection system 300 are the same as those of the first image acquisition unit and the second acquisition unit when the calibration element 100 is described with reference to FIGS. 1 to 6 and the method 400 described with reference to FIG. 8, which are not described in detail herein for the sake of brevity.

The at least one light source may include one light source or a plurality of light sources. For example, as shown in FIG. 7, the at least one light source may include a first light source 5 and a second light source 6. The first light source and the second light source may be disposed up and down, or may be disposed side by side. The first light source 5 and the second light source 6 may be used to illuminate the calibration element 100 located on the carrier 2, so that the color feature of the at least one reference portion under illumination by the light sources is obtained by the image acquisition unit.

The detection system may be calibrated by using the calibration element 100, so as to efficiently and comprehensively determine whether a fault exists in the detection system, so as to timely detect and solve the problem, promote the normal operation of the detection system, improve the measurement accuracy and reliability of the detection system, thus making the detection result accurate.

An embodiment of the present application further provides a computer-readable storage medium storing computer instructions, where the computer instructions are configured to enable a computer to perform the above described method 400.

An embodiment of the present application further provides a computer program product, including a computer program, where the computer program, when executed by a processor, implements the above described method 400.

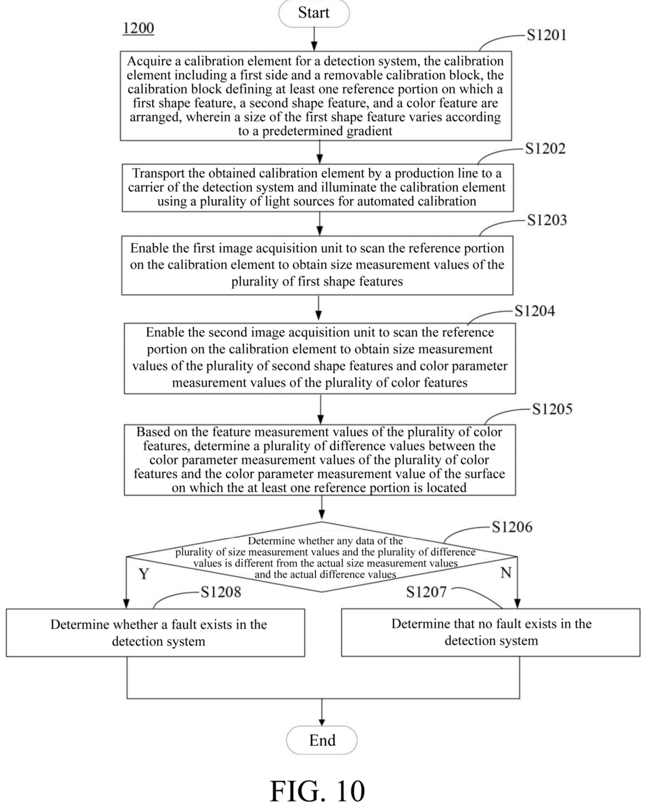

As shown in FIG. 10, a method 1200 for calibrating a detection system according to other embodiments of the present application includes the following steps S1201 to 1208.

In step S1201, a calibration element 100 for a detection system is obtained, the calibration element including a detachable calibration block 200, at least one reference portion 102 being defined on the calibration block 200, a first shape feature 106, a second shape feature 105, and a color feature being disposed on the at least one reference portion 102, where a size of the first shape feature of the at least one reference portion varies according to a predetermined gradient.

In step S1202, the obtained calibration element 100 is transported by the production line to the carrier 2 of the detection system 300 and illuminated with a plurality of light sources for automated calibration.

In step S1203, the first image acquisition unit 4 is enabled to scan the reference portion on the calibration element 100 to obtain size measurement values of a plurality of first shape features.

In step S1204, the second image acquisition unit 5 is enabled to scan the reference portion on the calibration element 100 to obtain size measurement values of the plurality of second shape features and color parameter measurement values of the plurality of color features.

At step S1205, based on the color parameter measurement values of the plurality of color features, a plurality of difference values between the color parameter measurement values of the plurality of color features and the color parameter of the surface on which the at least one reference portion is located are determined.

In step S1206, whether any data of the plurality of size measurement values and the plurality of difference values is different from the actual size measurement values and the actual difference values is determined.

In step S1207, in response to any data of the plurality of size measurement values and the plurality of difference values being the same as the actual size measurement values and the actual difference values, it is determined that no fault exists in the detection system.

In step S1208, in response to in response to any data of the plurality of size measurement values and the plurality of difference values being the different from the actual size measurement values and the actual difference values, it is determined that a fault exists in the detection system.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A calibration element for a detection system, comprising:
a base body;
at least one reference portion located at a side surface of the base body, wherein the at least one reference portion has at least two of the following items:
at least one first shape feature perpendicular to the side face;
at least one second shape feature parallel to the side face; and
at least one color feature,
wherein the at least one first shape feature, the at least one second shape feature and the at least one color feature are used for calibration of the detection system; and
wherein the detection system comprises a first image acquisition unit and a second image acquisition unit, and the at least one first shape feature is used for calibration of the first image acquisition unit, and the at least one second shape feature and the at least one color feature are used for calibration of the second image acquisition unit.

2. The calibration element according to claim 1, wherein any one reference portion comprises a corresponding first shape feature, a corresponding second shape feature and a corresponding color feature.

3. The calibration element according to claim 1 or 2, wherein the calibration element comprises a plurality of reference portions, each of the reference portions comprising a corresponding first shape feature, a size of the first shape feature corresponding to each of the plurality of reference portions varying according to a predetermined variation rule.

4. The calibration element according to any one of claims 1 to 3, wherein there is a predetermined difference value between a color parameter of the at least one color feature and a color parameter of a surface on which the at least one reference portion is located.

5. The calibration element according to claim 4, wherein the predetermined difference value is obtained by performing an oxidation treatment on the at least one reference portion and the surface and performing an electric spark treatment on the surface after the oxidation treatment.

6. The calibration element according to any one of claims 1 to 5, wherein a groove is formed in a side face of the base body, and the calibration element further comprises a calibration block for being inserted into the groove, the calibration block defining the at least one reference portion.

7. The calibration element according to claim 6, wherein the calibration block is detachably connected to the base body.

8. The calibration element according to any one of claims 1 to 7, wherein the base body is provided with a hollow portion for reducing the weight of the base body.

9. The calibration element according to any one of claims 1 to 8, wherein the shape and size of the base body match the shape and size of a cell.

10. A method for calibrating a detection system using the calibration element according to any one of claims 1 to 9, wherein the detection system comprises a first image acquisition unit and a second image acquisition unit, and the method comprises:
enabling the first image acquisition unit and the second image acquisition unit to scan at least one reference portion of the calibration element to obtain measurement data of the at least one reference portion, wherein the measurement data comprises measurement data of the at least two of the at least one first shape feature, the at least one second shape feature, and the at least one color feature;
acquiring actual data of the at least one reference portion, the actual data comprising actual data of the at least two of the at least one first shape feature, the at least one second shape feature, and the at least one color feature; and
determining whether a fault exists in the detection system based on the measurement data and the actual data.

11. The method according to claim 10, wherein the at least one reference portion has the at least one first shape feature, the at least one second shape feature, and the at least one color feature, and enabling the first image acquisition unit and the second image acquisition unit to scan the at least one reference portion of the calibration element to obtain measurement data of the at least one reference portion comprises:
enabling the first image acquisition unit to scan at least one reference portion of the calibration element to obtain measurement data of a size of the at least one first shape feature; and
at least enabling the second image acquisition unit to scan at least one reference portion of the calibration element to obtain measurement data of a size of the at least one second shape feature and measurement data of a color of the at least one color feature.

12. The method according to claim **11,** wherein the detection system further comprises a light source, and enabling at least the second image acquisition unit to scan at least one reference portion of the calibration element comprises:
enabling the light source to illuminate the calibration element; and
enabling the second image acquisition unit to scan at least one reference portion of the calibration element.

13. The method according to any one of claims 10 to 12, wherein the measurement data of the at least one color feature comprises measurement data of a color difference value between the at least one color feature and a surface on which the at least one reference portion is located, and the actual data of the at least one color feature comprises actual data of the color difference value between the at least one color feature and the surface on which the at least one reference portion is located.

14. An apparatus for calibrating a detection system using the calibration element according to any one of claims 1 to 9, the detection system comprising a first image acquisition unit and a second image acquisition unit, wherein the apparatus comprises:
a scanning module, configured to enable the first image acquisition unit and the second image acquisition unit to scan at least one reference portion of the calibration element to obtain measurement data of the at least one reference portion, wherein the measurement data comprises measurement data of the at least two of the at least one first shape feature, the at least one second shape feature, and the at least one color feature;
a first acquisition module, configured to acquire actual data of the at least one reference portion, the actual data comprising actual data of the at least two of the at least one first shape feature, the at least one second shape feature, and the at least one color feature; and
a first determining module, configured to determine whether a fault exists in the detection system based on the measurement data and the actual data.

15. An electronic device, comprising at least one processor and a memory communicatively connected to the at least one processor, wherein
the memory stores instructions executable by the at least one processor, the instructions being executed by the at least one processor to enable the at least one processor to perform the method according to any one of claims 10 to 13.

16. A detection system, comprising:
the calibration element according to any one of claims 1 to 9;
a carrier, configured to place the calibration element;
at least one light source, configured to illuminate the calibration element located on the carrier;
a first image acquisition unit, configured to scan the calibration element located on the carrier to acquire information of a first shape feature of at least one reference portion of the calibration element; and
a second image acquisition unit, configured to scan the calibration element located on the carrier to acquire information of a second shape feature and a color feature of the at least one reference portion.
